Europäisches Patentamt

European Patent Office

Office européen des brevets

(11) Veröffentlichungsnummer: **0 273 338 B1**

(12) **EUROPÄISCHE PATENTSCHRIFT**

(45) Veröffentlichungstag der Patentschrift: **18.03.92**

(51) Int. Cl.⁵: **A01K 3/00**

(21) Anmeldenummer: **87118915.5**

(22) Anmeldetag: **21.12.87**

(54) **Leitsystem für Amphibien und andere Tiere.**

(30) Priorität: **20.12.86 DE 3643810**

(43) Veröffentlichungstag der Anmeldung:
**06.07.88 Patentblatt 88/27**

(45) Bekanntmachung des Hinweises auf die
Patenterteilung:
**18.03.92 Patentblatt 92/12**

(84) Benannte Vertragsstaaten:
**AT BE CH DE ES FR GB GR IT LI LU NL SE**

(56) Entgegenhaltungen:
**DE-A- 3 504 312**

(73) Patentinhaber: **ACO Severin Ahlmann GmbH &
Co. KG
Postfach 320, Am Ahlmannkai
W-2370 Rendsburg(DE)**

(72) Erfinder: **Brehm, Kuno Dr.
Uhlenbrook
W-2371 Bokelholm(DE)**
Erfinder: **Theede, Jurgen
Am See 22
W-2373 Schulldorf(DE)**
Erfinder: **Ahlmann, Hans-Julius
Gluckauf-Allee 5
W-2370 Budelsdorf(DE)**
Erfinder: **Ebsen, Arno
Sandberg 7
W-2370 Budelsdorf(DE)**
Erfinder: **Ullrich, Ulrich
Tannenallee 35
W-2000 Norderstedt(DE)**

(74) Vertreter: **Bohnenberger, Johannes, Dr. et al
Meissner, Bolte & Partner Widenmayerstrasse 48 Postfach 86 06 24
W-8000 München 86(DE)**

Rank Xerox (UK) Business Services

**Beschreibung**

Die Erfindung betrifft ein Leitsystem für Amphibien nach dem Oberbegriff des Patentanspruches 1 oder 14.

Bestimmte Amphibien, zum Beispiel Kröten und Frösche, suchen bestimmte Gewässer nur zur Paarungs- und Laichzeit auf und wandern anschließend wieder in die Umgebung ab. Hierbei werden nicht unerhebliche Strecken zurückgelegt. Häufig werden derartige Wanderwege von mehr oder weniger stark befahrenen Straßen und Fahrwegen durchquert. Um derartige Amphibien vor dem Überfahrenwerden zu schützen, ist bereits bekannt geworden, beidseits von Straßen Schutzzäune zu errichten. Es wurde festgestellt, daß Amphibien bis zu 200 m an dem Schutzzaun entlangwandern, um nach einer Überwindungsmöglichkeit zu suchen. In gewissen Abständen werden daher die Zäune von Tunneln unterbrochen, welche unter der Straße oder dem Fahrweg hindurchgeführt sind. Die Amphibien haben dann die Möglichkeit, durch den Tunnel gefahrlos die andere Straßenseite zu erreichen und ihre Wanderung zum Laichgewässer oder von diesem fort fortzusetzen.

Herkömmliche Schutzzäune sind aus Folienmaterial oder aus einem Geflecht gebildet, das mit Hilfe von in Abständen eingesetzten Pfählen oder Pflöcken am Untergrund befestigt wird. Derartige Schutzzäune haben jedoch etliche Nachteile. Falls die Tiere auf irgendeinem Weg auf die Straße geraten sind, können sie den Schutzzaun nicht überklettern und sich in Sicherheit bringen. Da die Tiere sich aus einem größeren Umgebungsbereich am Schutzzaun sammeln und an diesem entlangwandern, besteht die Gefahr, daß natürliche Feinde die wandernden Tiere sehen und sie bequem fressen können. Falls am Leitsystem entlang keine Gräser oder Sträucher wachsen, sind die Tiere unmittelbar der Sonnenbestrahlung ausgesetzt. Nachteilig ist ferner, daß herkömmliche Schutzzäune nicht sehr stabil sind und daher zumeist Jahr für Jahr vollständig erneuert werden müssen. Sie können von Mähbalken beim Abmähen der Straßenböschung zerstört werden. Ferner können sie durch Fließwasser oder durch an Böschungen abrutschende Erde stark beschädigt werden usw.

Es ist auch bereits bekannt geworden, die oben beschriebenen schwachen Schutzzäune durch Holzzäune oder durch Wälle aus Holzbalken zu ersetzen. Derartige Konstruktionen sind zwar stabiler und weisen daher eine höhere Lebensdauer auf, sie können jedoch oft leicht überklettert werden. Ferner muß das Holz aus Schutzgründen imprägniert werden, was für Amphibien normalerweise schädlich sein kann. Wird ein derartiger Zaun oder ein derartiger Wall nicht an einer Böschung installiert, können Amphibien, die sich auf die Straße verirrt haben, diesen von der Straßenseite nicht überwinden. Die Verwendung von Holz birgt überdies die Gefahr, daß es gestohlen wird, vor allen Dingen, wenn relativ wertvolles Holz verwendet wird. Außerdem stellen derartige Konstruktionen eine zusätzliche Gefahr bei von der Fahrbahn abkommenden Fahrzeugen dar.

Die Firma Karlolith hat ein Amphibienwanderungssystem vorbenutzt, welches schalenförmige Betonformsteine umfaßt, die einen im wesentlichen U-förmigen Querschnitt aufweisen, wobei der eine, der Fahrbahn zugewandte Schenkel länger als der amdere, der Fahrbahn abgewandte Schenkel ist. Das bekannte Leitsystem ist derart in den Boden eingegraben, daß die beiden Schenkel an ihren Enden bündig zum Untergrund verlaufen. Dieses bekannte System ist materialaufwendig und nur mit großem Aufwand einzubauen.

Das deutsche Geschmacksmuster, das unter dem Aktenzeichen MR II 609 beim Amtsgericht Landau hinterlegt ist, zeigt ein Amphibienleitsystem der eingangs genannten Art. Zum einen kann dieses bekannte System auch nur mit großem Aufwand, insbesondere auf unebenen Untergrund verlegt werden, zum anderen ist die Stabilität der Zaunelemente nicht hinreichend.

Schließlich besteht bei den bekannten Systemen das Problem, daß die Amphibien den Tunnel nur ungern betreten und somit der eigentliche Zweck des Leitsystems, nämlich die Amphibien zum Laichplatz gelangen zu lassen, nicht erfüllt wird.

Der Erfindung liegt die Aufgabe zugrunde, ein Leitsystem der eingangs genannten Art dahingehend zu verbessern, daß mit geringem Aufwand ein sicheres Führen der Amphibien zum Laichplatz und wieder zurück ermöglicht wird.

Diese Aufgabe wird einerseits durch die im Kennzeichen des Patentanspruches 1 und andererseits durch die im Kennzeichen des Patentanspruches 14 angegebenen Merkmale gelöst.

Die erfindungsgemäßen länglichen Zaunelemente können aus einem beliebigen geeigneten Material geformt werden, wie Holz, Kunststoff oder Polymerbeton. Besonders bevorzugt ist Kunststoff-Recyclingmaterial wegen der niedrigen Materialkosten. Auch die Herstellung der erfindungsgemäßen Zaunelemente läßt sich mit einfachen Formwerkzeugen auf einfache Weise bewerkstelligen.

Erfindungswesentlich ist eine geneigte Außenseite der Schalen- oder Plattenelemente, so daß sie von einer Seite von den Tieren ohne weiteres überwindbar sind. Bei einer Anordnung des Leitzauns entlang einer Straße ist die geneigte Seite der Straße zugekehrt. Auf der gegenüberliegenden Seite ist das Element entsprechend steil und/oder mit Überhang ausgeführt, so daß es von den Tieren nicht über windbar ist. Im einfachsten Fall werden flache Plattenelemente verwendet, die dachförmig aufgestellt und mit Hilfe geeigneter Stützen im oberen Bereich im Untergrund abgestützt sind. Hierzu können pfahlförmige Stützen vorgesehen werden, die zugleich in den Untergrund versenkt werden, um eine Verankerung am Untergrund zu erzielen. Derartige Zaunelemente können auf einfache Weise unabhängig von der Oberflächenbeschaffenheit des Untergrundes am Untergrund angebracht werden. Durch ihre Schrägstellung verleihen sie den am Zaun entlangwandernden Tiere einen gewissen Schutz gegen Einsicht durch Feinde und gegen Sonneneinstrahlung. Die erfindungsgemäßen Zaunelemente sind so aufgebaut, daß sie eine Böschung baulich wenig verändern. Fließ- und Sickerwasser sowie Frost und Erddruck bereiten keine Probleme. Andererseits kann der Zaun so ausgebildet sein, daß durch ein Betreten keine Zerstörung eintritt. Die Werkstoffe sind derart, daß gegen Frost und Tausalz Beständigkeit vorhanden ist, ebenso gegen hohe Temperaturen und UV-Strahlung. Im Fall eines Autounfalls ist das Material des Leitsystems ausreichend "weich", so daß davon besondere Gefahren nicht ausgehen. Wird das Leitsystem vom Mähbalken eines Mähgerätes berührt, wird dieser kaum geschädigt.

Schließlich sei erwähnt, daß das erfindungsgemäße Leitsystem auch von Laien ohne Probleme aufgebaut werden kann und es im aufgebauten Zustand ohne Wartung lange haltbar und verrottungsfest ist. Auch die Transport- und Lagerkosten sind verhältnismäßig gering.

In einer Ausgestaltung der Erfindung ist vorgesehen, daß in die Zaunelemente mindestens ein sich aufrecht erstreckender Schlitz geformt ist.Durch den Schlitz kann die Böschung herunterlaufendes Wasser auf die andere Seite des Plattenelements gelangen, so daß sich ein erheblicher Wasserdruck erst gar nicht aufbauen kann.

Eine zusätzliche Befestigung der platten- oder schalenförmigen Elemente am Untergrund kann dadurch erhalten werden, daß der auf dem Untergrund aufliegende Bereich am Untergrund befestigt wird. Dies kann zum Beispiel mit Hilfe von Pflöcken oder dergleichen erfolgen, die durch Löcher des plattenförmigen Elements geführt sind. Die Löcher können nach einer anderen Ausgestaltung der Erfindung in flanschartigen Abschnitten des plattenförmigen Elements geformt sein. Auch die Pflöcke und/oder die Pfähle können aus Kunststoffmaterial geformt werden, so daß sie ebenfalls verrottungsfest sind.

Um die Überwindbarkeit des erfindungsgemäßen Leitsystems zu verschlechtern, sieht eine Ausgestaltung der Erfindung vor, daß das plattenförmige Element im oberen Bereich einen horizontalen und/oder schräg oder vertikal nach unten ragenden Abschnitt aufweist. Durch diesen Abschnitt werden vor allem diejenigen Tiere abgehalten, die über die Stützen nach oben kriechen und den Zaun auf diese Weise zu überwinden versuchen.

Das platten- oder schalenförmige Element kann, wie bereits ausgeführt, mit einer Dachschräge versehen sein. Nach einer anderen Ausgestaltung der Erfindung ist vorgesehen, daß es zumindest über einen Teil seiner Höhe im Querschnitt bogenförmig gekrümmt ist. Die Bogenform ist im Hinblick auf die Druckbelastung günstiger. Daher kann bei gleichem Material eine geringere Dicke gewählt werden als bei eben verlaufenden Plattenabschnitten.

Die erfindungsgemäßen Zaunelemente müssen derart aneinandergereiht werden, daß möglichst kein Zwischenraum, durch den die Tiere hindurchschlüpfen können, verbleibt. Hierfür bieten sich verschiedene konstruktive Möglichkeiten an. Die Zaunelemente können zum Beispiel über eine Nut-Federverbindung miteinander verbunden werden. Eine derartige Verbindung ist jedoch bei kurvenförmigen Verläufen eines Zauns unter Anpassung an Bodenunebenheiten problematisch. Eine andere Ausgestaltung der Erfindung sieht vor, daß die plattenförmigen Elemente an einem Ende einen stufenartig erweiterten oder verjüngten Abschnitt aufweisen, der teleskopisch mit dem Ende des benachbarten plattenförmigen Elements zusammenwirkt. Bei dieser Ausführungsform werden die plattenförmigen Elemente wie Rohre teleskopisch zusammengesteckt. Eine derartige Verbindungsart ermöglicht auch eine Fehlausrichtung der Elemente zueinander, um einen kurvigen Verlauf des Zauns zu erhalten,ohne daß unerwünschte Lücken an den Stoßstellen entstehen. Falls derartige Lücken entstehen, kann an den Stoßstellen das Material mit Hilfe geeigneter Werkzeuge schräg angeschnitten werden, um sogenannte Schmiegen zu erhalten. Zu diesem Zweck können entsprechende Markierungen vorgesehen werden, die der Montageperson anzeigen, wie bei erwünschten Winkeln/Radien angeschnitten werden muß. Statt der Markierungen können auch Schwächungslinien geformt sein, die ein Abschlagen von unerwünschtem Material ermöglichen ohne die Zuhilfenahme von Trennwerkzeugen.

Eine andere Ausführungsform der Erfindung sieht vor, daß Folienabschnitte oder flexible Plattenabschnitte, vorzugsweise aus Kunststoff, überlappend über die Stoßstellen gelegt und mit den Plattenelementen verbunden werden. Die Folien oder Plattenabschnitte können mit den benachbarten Enden der Plattenelemente durch Nageln, Klammern, Kleben oder dergleichen fest verbunden werden und dadurch möglicherweise entstehende Lücken überdecken. Alternativ oder zusätzlich können U-förmige Klammern vorgesehen werden, die aneinanderstoßende Zaunelemente zusammenhalten. Die Klammern können in entsprechend vorgeformte Öffnungen oder Ausnehmungen der Zaunelemente eingesetzt werden.

Die Stützen oder Pfähle zur Abstützung der Zaunelemente am Untergrund werden vorzugsweise in einer Ausnehmung der Elemente aufgenommen. Eine Befestigung an den Zaunelementen erfolgt vorzugsweise über eine Schraubverbindung.

Bei herkömmlichen Leitsystemen werden die Tunnel von rohrförmigen Tunnelelementen gebildet, die(in erheblicher Tiefe) unter der Straßenoberfläche hindurchgeführt sind. Innerhalb des Tunnels herrscht daher mehr oder weniger Dunkelheit und ggf. eine tiefere Temperatur als außerhalb bei feuchter Atmosphäre. Hierdurch z.B. werden die Tiere oft abgehalten, sich durch den Tunnel zu bewegen. Daher sieht eine Ausgestaltung der Erfindung vor, daß die Tunnelelemente einen relativ abriebfesten oberen Wandabschnitt aufweisen, der mit Durchtrittsschlitzen versehen ist und die Tunnelelemente so in den Untergrund eingebaut werden, daß die Oberseite annähernd plan mit der Oberseite des Untergrundes, zum Beispiel einer Straßenoberfläche, verläuft. Derartige Tunnelelemente haben den Vorteil, daß sie eine Belüftung des Tunnels ermöglichen sowie eine gewisse Beleuchtung und den Orientierungssinn nicht beeinträchtigen. Sie haben ferner den Vorteil,daß sie sich leichter zum Beispiel in eine Fahrbahn einbauen lassen als herkömmliche Tunnelelemente.

Eine weitere Ausgestaltung der Erfindung sieht vor, daß vor dem Eingang des Tunnels Leitflächen angeordnet sind, die annähernd quer zur Längsrichtung des Zauns verlaufen. Sie sind vorzugsweise an einem im Querschnitt annähernd dreieckförmigen Leitelement geformt, dessen eine Spitze annähernd auf der Achse des Tunnels liegt. Die Leitflächen sorgen dafür, daß an dem Leitzaun entlangwandernde Tiere automatisch in Richtung des Tunnels gelenkt werden, wenn sie auf die Leitflächen auftreffen. Sind derartige Leitflächen nicht vorhanden, besteht die Gefahr, daß die Tiere den Tunnel nicht bemerken und am Tunneleingang vorbei sich weiter am Zaun entlangbewegen.

Die Erfindung wird nachfolgend anhand von Zeichnungen näher erläutert.

Fig. 1    zeigt schematisch eine Draufsicht auf einen Teil des erfindungsgemäßen Leitsystems.

Fig. 2    zeigt einen Schnitt durch die Darstellung nach Fig. 1 entlang der Linie 2-2.

Fig. 3    zeigt einen Schnitt durch die Darstellung nach Fig. 1 entlang der Linie 3-3.

Fig. 4    zeigt eine ähnliche Darstellung wie Fig. 3, jedoch in etwas abgewandelter Ausführung.

Fig. 5    zeigt eine Seitenansicht eines Zaunelements nach Fig. 3 in Richtung des Pfeils 5.

Fig. 6    zeigt eine Endansicht des Zaunelements nach Fig. 5 in Richtung des Pfeils 6.

Fig. 7    zeigt perspektivisch eine andere Ausführungsform eines Zaunelements des erfindungsgemäßen Leitsystems.

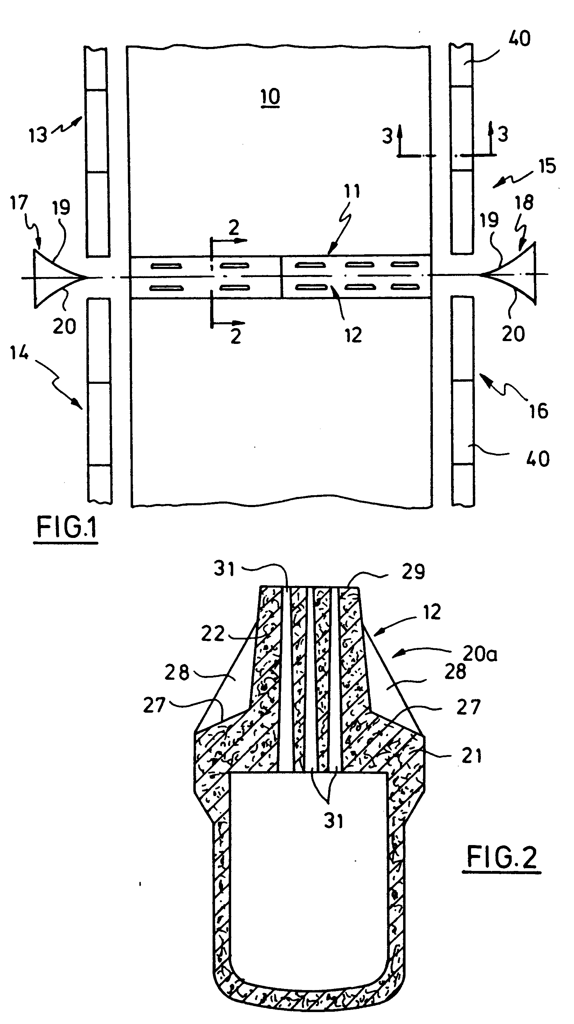

In Fig. 1 ist eine Draufsicht auf eine Straße 10 gezeigt, die von einem Tunnel 11 unterquert wird. Der Tunnel 11 besteht aus einzelnen Tunnelelementen 12, von denen in Fig. 1 aus Vereinfachungsgründen lediglich zwei dargestellt sind. Die Tunnelelemente haben z.B. eine Länge von 1 m; die Anzahl der Tunnelelemente 12 entspricht naturgemäß der Breite der Straße 10. Auf jeder Seite der Straße 10 sind beidseits des Tunnels 11 Leitzäune 13, 14, 15 und 16 parallel zur Straße 10 angeordnet. Der Abstand benachbarter Zaunenden entspricht annähernd der Breite des Tunnels 11. In diesen Abstand hinein erstreckt sich ein im Querschnitt dreieckförmiges Leitelement 17, 18 mit Leitflächen 19, 20. Die aufrechten Leitflächen 18, 19 können gerade oder konkav gekrümmt sein, wie in Fig. 1 dargestellt. Sie schneiden sich in einer Linie, die annähernd auf der Achse des Tunnels 11 liegt. Von beiden Seiten sich der Straße 10 nähernde Tiere, wie Amphibien, Mäuse und ähnliche Tiere werden durch die Zäune 13 bis 16 abgehalten, unmittelbar auf die Straße 10 zu gelangen. Sie wandern den Zäunen entlang und gelangen irgendwann in den Bereich des Tunnels 11. Sie werden mit Hilfe der Leitflächen 19 bzw. 20 mehr oder weniger in Richtung des Tunnels 11 gelenkt und können auf diese Weise gefahrlos auf die andere Seite der Straße 10 gelangen. Nachstehend werden Einzelheiten des in Fig. 1 schematisch dargestellten Leitsystems erläutert.

Fig. 2 zeigt einen Schnitt durch das Tunnelement 12. Das Tunnelelement 12 ist ein einteilig geformter Rinnenkörper z.B. aus Polymerbeton mit einer Abdeckung 20a. Er besitzt einen unteren Auflagerabschnitt 21 und einen oberen Verschleißabschnitt 22. Der Auflagerabschnitt 21 ist an seiner Oberseite, wie bei 27 gezeigt, dachförmig und geht in den Verschleißabschnitt 22 über, der sich stetig geringfügig nach oben in seiner Breite verringert. Die Höhe des Verschleißabschnittes 22 ist annähernd doppelt so groß wie die des Auflagerabschnitts 21, und die Gesamthöhe der Abdeckung 20 ist im Bereich der lichten Weite des Rinnenkörpers. An die Außenseiten von Auflager- und Verschleißabschnitt sind in Längsrichtung beabstandete Rippen 28 angeformt, die die Seitenstabilität vergrößern. Die befahrene Oberfläche 29 des Verschleißabschnitts 22 bildet eine Durchtrittszone für Luft, Licht und auch Wasser. Sie liegt nach dem Einbau des Rinnenkörpers auf gleichem Niveau wie die Fahrbahnebene. Wie aus den Figuren 1 und 2 hervorgeht, sind mehrere Öffnungen 31 durch die Abdeckung 20a geformt.

Der gezeigte Rinnenkörper läßt sich auf einfache Weise in einen Fahrweg oder eine Straße einbauen und ermöglicht eine gewisse Temperierung und Beleuchtung im Inneren des Rinnenkörpers, so daß günstigere Bedingungen geschaffen werden für ein Hindurchwandern von Tieren durch den Tunnel 11.

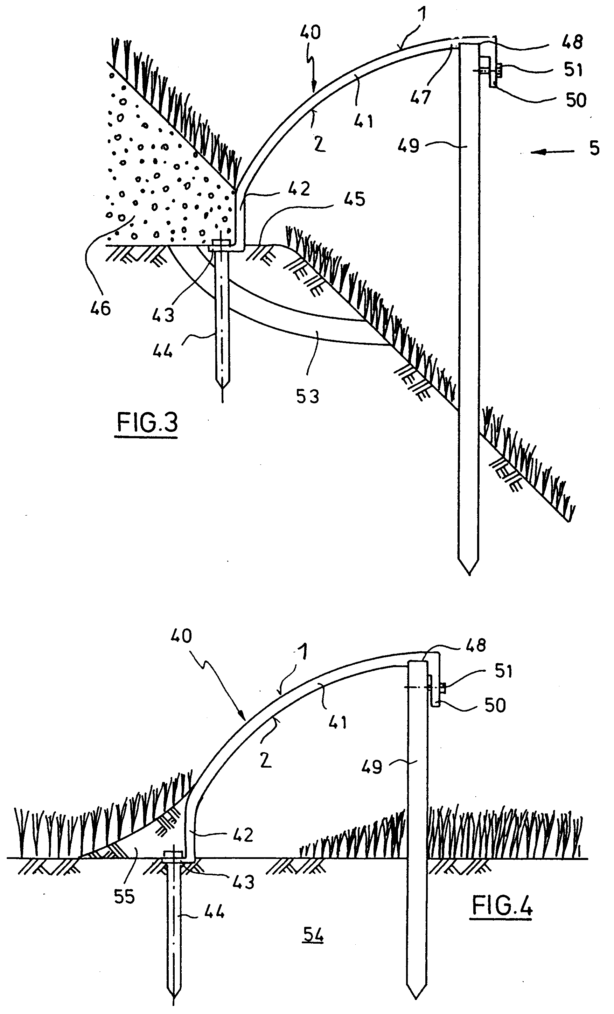

Die Zäune 13 bis 16 sind aus einzelnen Zaunelementen 40 aufgebaut. In den Figuren 3 bis 6 gehen Einzelheiten der Zaunelemente 40 näher hervor.

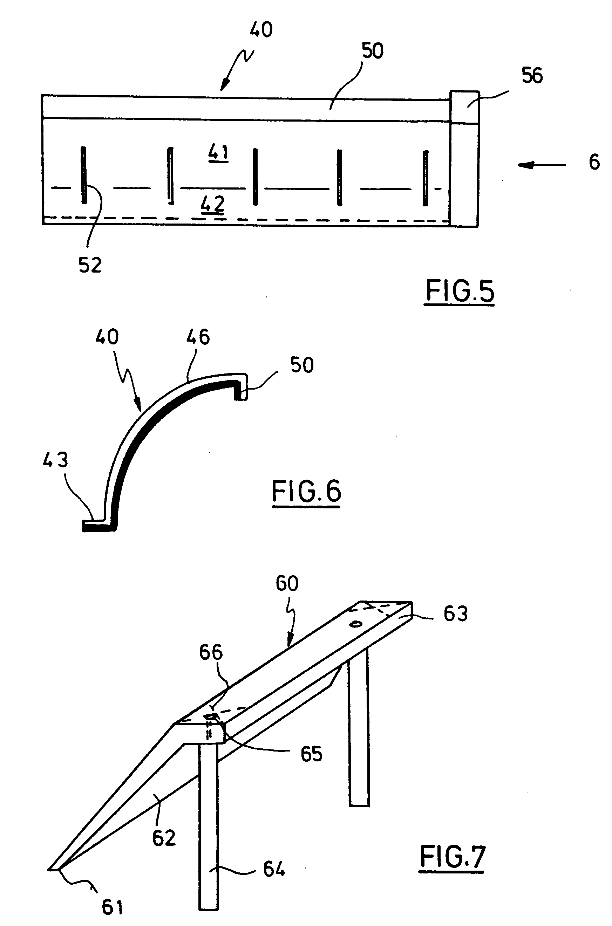

In den Figuren 3 und 4 ist ein schalenartiges Zaunelement 40 dargestellt, das einen im Querschnitt kreisbogenförmig gekrümmten Abschnitt 41 aufweist, an den sich ein vertikaler gerader Abschnitt 42 anschließt. Am unteren Ende ist an dem Abschnitt 42 ein kurzer nach außen weisender Flanschabschnitt 43 angeformt, der mit mehreren in Längsrichtung beabstandeten Löchern versehen ist, durch die Pflöcke 44 hindurchführbar sind, um das Zaunelement 40 auf einem Absatz 45 einer Straßenböschung zu fixieren. Auf dem Absatz 45 ist Dränagekies 46 aufgebracht, der teilweise an der Außenseite des Elements 40 anliegt, wie in Fig. 3 gezeigt. Am oberen Ende ist der gekrümmte Abschnitt bei 47 etwas verdickt. Der verdickte Abschnitt enthält mehrere in Längsabständen angeordnete Ausnehmungen 48, die das obere Ende einer Stütze oder eines Pfahls 49 aufnehmen. An den Abschnitt 41 schließt sich ein vertikal sich nach unten erstreckender Abschnitt 50 an, der in Höhe der Ausnehmungen 48 mit Löchern versehen ist zur Aufnahme einer Schraube 51, die zur Befestigung des Pfahls 49 dient. Der Pfahl 49 ist in die Böschung eingelassen, so daß das schalenförmige Zaunelement an beiden Seiten fest mit dem Untergrund verankert ist. Wie aus Fig. 5 zu erkennen, sind in dem Abschnitt 41 mehrere in Längsrichtung beabstandete relativ schmale Schlitze 52 eingeformt. Durch die Schlitze 52 kann die Böschung herablaufendes Wasser hindurchtreten, sofern es nicht rasch genug über ein Dränagerohr 53 abgeführt werden kann.

In Fig. 4 sind die gleichen Teile wie in Fig. 3 dargestellt, so daß sie mit gleichen Bezugszeichen versehen sind. Das Zaunelement ist jedoch auf einem anderen, nämlich relativ flachen Untergrund 54 befestigt. Die Halterung erfolgt mit Hilfe von Pfählen 49 und Pflöcken 44. In Höhe des Abschnitts 42 ist von außen Erde angeworfen, wie bei 55 dargestellt. Dadurch wird die Befestigung der Elemente 40 verbessert. Ferner kann ebenso wie bei der Anordnung nach Fig. 3 das Element 40 von der linken Seite von Amphibien oder dergleichen ohne weiteres überwunden werden. In umgekehrter Richtung ist eine Überwindung infolge des Überhangs ausgeschlossen. Auch an den Pfählen 49 hochkletternde Tiere können wegen des Abschnitts 50 nicht auf die andere Seite gelangen.

Die gezeigten Teile des Zaunelements, nämlich schalenförmiges Element 40 sowie die Pflöcke 44 und die Pfähle 49 sind aus einem vorzugsweise nicht verrottendem Material wie Kunststoff, geformt. Die Anbringung ist so stabil, daß auch ein Betreten möglich ist, ohne den Zaun zu zerstören. Ferner ist das Material von einer nur mäßigen Härte, daß ein Mähbalken eines Mähgeräts möglichst nicht zerstört wird, wenn er den Zaun berührt.

Aus Fig. 5 und 6 ist zu entnehmen, daß das Zaunelement 40 an einem Ende eine stufenartige oder muffenartige Erweiterung 56 aufweist. Auf diese Weise können die Elemente 40 teleskopisch ineinandergesteckt werden.

Soll mit Hilfe der Zaunelemente 40 ein kurvenförmiger Verlauf des Zauns erreicht werden, ohne daß zwischen den aneinanderstoßenden Elementen 40 eine zu breite Lücke entsteht, ist es unter Umständen erforderlich, die sich senkrecht zur Längsachse erstreckenden Stirnflächen entsprechend anzuschrägen. Hierfür können entsprechende Markierungen oder Schwächungslinien vorgesehen werden. Alternativ ist es auch möglich, gegen aneinanderstoßende Enden von Zaunelementen Folienabschnitte oder flexible Plattenabschnitte anzulegen und an diesen zu befestigen, beispielsweise mit Hilfe von Nägeln, Klammern oder dergleichen oder durch Klebung, um Lücken zwischen den Elementen zu überbrücken.

In Fig. 7 ist eine abgewandelte Ausführungsform eines Zaunelements 60 perspektivisch dargestellt. Es bildet die Form eines plattenförmigen Elements, das dachartig auf einem Untergrund aufgestellt ist. An die auf dem Untergrund aufliegende Kante 61 kann sich ein nach außen weisender Flanschabschnitt, wie der Flanschabschnitt 43 nach den Figuren 3 und 4 anschließen, damit er mit Hilfe von Pflöcken am Boden fixiert werden kann. In Fig. 6 schließt sich an den Plattenabschnitt 62 im oberen Bereich ein horizontal sich erstreckender überstehender Abschnitt 63 an, der an der Unterseite Ausnehmungen aufweist zur Aufnahme von Pfählen 64, die, wie in den Figuren 3 und 4 gezeigt ist, mehr oder weniger tief in den Untergrund eingetrieben werden können. Die Pfähle 64 können, wie bei 65 dargestellt, mit Hilfe von Schrauben am Abschnitt 63 befestigt werden. Markierungen 66 zeigen Möglichkeiten an, den Abschnitt 63 und ggf. auch den Abschnitt 62 winklig abzuschneiden, um eine entsprechende Schmiege zu erhalten, falls mit Hilfe der Elemente 60 ein winkliger oder bogenförmiger Verlauf eines Zauns erzielt werden soll. Die Wirkungsweise des Zaunelements 60 ist die gleiche wie die des Zaunelements 40: Unüberwindbarkeit von einer und Überwindbarkeit von der anderen Seite, dachförmige Schutzwirkung und damit Schutz gegen Sonneneinstrahlung und Sichtschutz. Außerdem wird der wesentliche Vorteil erhalten, daß sich die Tiere bei einem Wandern entlang des Zauns auf natürlichem Untergrund bewegen.

Die Höhe der Zaunelemente 40, 60 beträgt vorzugsweise 40 cm.

**Patentansprüche**

1. Leitsystem für Amphibien und andere Tiere, insbesondere an Straßen, Wegen oder dergleichen mit einem auf dem Untergrund aufgestellten, langgestreckten aus einzelnen aneinandergereihten Zaunelementen (40, 60) aufgebauten Zaun (13, 14, 15, 16) an mindestens einer Seite der Fahrbahn (10) der Straße, des Weges oder dergleichen, mit mindestens einem aus rohrartigen Tunnelelementen (12) gebildeten Tunnel (11) unterhalb der Fahrbahn (10), dessen einer Eingang auf der der Fahrbahn (10) abgewandten Seite des Zauns liegt, wobei die Zaunelemente (40, 60) längliche Platten oder Schalenelemente sind, die eine der Fahrbahn (10) zugekehrte, von dieser Fahrbahn (10) weggeneigte, von den Tieren leicht zu erkletternde erste Außenseite (1) aufweisen und deren der ersten Außenseite (1) gegenüberliegende, von den Tieren schwer zu erkletternde zweite Außenseite (2) zum Untergrund steil und/oder mit Überhang geformt ist, **dadurch gekennzeichnet,** daß der obere Bereich (47, 63) des Zaunelementes (40, 60) durch eine oder mehrere Stützen (49, 64) am Untergrund abgestützt ist, und daß der auf dem Untergrund aufliegende untere Bereich (43, 61) der Zaunelemente (40, 60) durch einen flanschartigen, am unteren Rand der ersten Außenseite (1) nach außen weisenden Abschnitt zur Befestigung am Untergrund gebildet ist.

2. Leitsystem nach Anspruch 1, dadurch gekennzeichnet, daß in die Zaunelemente (40) mindestens ein sich aufrecht erstreckender Schlitz (52) geformt ist.

3. Leitsystem nach einen der vorhergehenden Ansprüche, dadurch gekennzeichnet, daß die Stützen (49, 64) platten- oder pfahlförmig ausgebildet sind.

4. Leitsystem nach einen der vorhergehenden Ansprüche, dadurch gekennzeichnet, daß die Stützen (49) in den Untergrund ein

setzbar sind.

5. Leitsystem nach einem der vorhergehenden Ansprüche, dadurch gekennzeichnet, daß die Befestigung am Untergrund mit Hilfe von Pflöcken (44) oder dergleichen durchführbar ist, die durch Löcher des Zaunelementes (40) geführt sind.

6. Leitsystem nach Anspruch 5, dadurch gekennzeichnet, daß der flanschartige Abschnitt (43) Löcher aufweist.

7. Leitsystem nach einem der vorhergehenden Ansprüche, dadurch gekennzeichnet, daß die Zaunelemente (40, 60) im oberen Bereich einen horizontal und/oder schräg oder vertikal nach unten ragenden Abschnitt (63, 50) aufweisen.

8. Leitsystem nach einem der vorhergehenden Ansprüche, dadurch gekennzeichnet, daß die Zaunelemente (40) zumindest über einen Teil Ihrer Höhe im Querschnitt bogenförmig gekrümmt sind.

9. Leitsystem nach einem der vorhergehenden Ansprüche, dadurch gekennzeichnet, daß an den aneinanderstoßenden Enden der Zaunelemente (40, 60) Markierungen oder Schwächungslinien (66) oder dergleichen vorgesehen sind, die in einem von 90° zur Linksachse abweichenden Winkel verlaufen.

10. Leitsystem nach einem der vorhergehenden Ansprüche, dadurch gekennzeichnet, daß die Zaunelemente (40, 60) an einem Ende einen stufen- oder muffenartig erweiterten oder verjüngten Abschnitt (56) aufweisen, der teleskopisch mit dem anderen Ende eines benachbarten Zaunelementes (40, 60) in Eingriff bringbar ist.

11. Leitsystem nach einem der vorhergehenden Ansprüche, gekennzeichnet durch Folienabschnitte oder flexible Plattenabschnitte, die über Stoßstellen zwischen aneinandergrenzenden Zaunelementen (30, 60) gelegt und mit diesen verbunden werden.

12. Leitsystem nach einem der vorhergehenden Ansprüche,
gekennzeichnet durch
U-förmige Klammern oder dergleichen zur Verbindung aneinanderstoßender Zaunelemente (40, 60).

13. Leitsystem nach einem der vorhergehenden Ansprüche,
dadurch gekennzeichnet,
daß die oberen Enden der Stützen (49) von einer Ausnehmung (48) der Zaunelemente (40) aufgenommen und mittels einer Schraubverbindung (51) befestigt sind.

14. Leitsystem für Amphibien und andere Tiere, insbesondere an Straßen, Wegen oder dergleichen, mit einem auf dem Untergrund aufgestellten, langgestreckten aus einzelnen aneinandergereihten Zaunelemente (40, 60) aufgebauten Zaun (13, 14, 15, 16) an einer Seite der Fahrbahn, der Straße, des Weges oder dergleichen und mit mindestens einem aus rohrartigem Tunnelelementen (12) gebildeten Tunnel (11) unterhalb der Fahrbahn (10), dessen einer Eingang auf der Fahrbahn abgewandten Seite des Zaunes liegt,
**dadurch gekennzeichnet,**
daß die Tunnelelemente (12) einen relativ abriebfesten oberen Wandabschnitt (20a) aufweisen, der mit Durchtrittsschlitzen oder -löchern (31) versehen ist, wobei die Tunnelelemente (12) so in den Untergrund der Straße, des Weges oder dergleichen eingebaut werden, daß die Oberseiten (29) der Tunnelelemente (12) annähernd fluchtend mit der Fläche der Fahrbahn (10) verlaufen.

15. Leitsystem nach Anspruch 14,
dadurch gekennzeichnet,
daß die Tunnelelemente (12) einteilig aus Polymerbeton geformt sind.

16. Leitsystem nach einem der vorhergehenden Ansprüche,
dadurch gekennzeichnet,
daß vor dem Eingang des Tunnels (11) Leitflächen (19, 20) angeordnet sind, die annähernd quer zur Längsrichtung des Zauns (13, 14, 15, 16) verlaufen.

17. Leitsystem nach Anspruch 16,
gekennzeichnet durch
ein im Querschnitt annähernd dreieckförmiges Leitelement (17, 18), dessen eine Spitze annähernd auf der Achse des Tunnels (11) liegt.

18. Leitsystem nach einem der vorhergehenden Ansprüche,

dadurch gekennzeichnet,
daß die Zaunelemente (40, 60) und/oder die Stützen (49, 64) und/oder die Pflöcke (44) aus Kunststoffmaterial geformt sind.

19. Leitsystem nach Anspruch 18,
dadurch gekennzeichnet,
daß das Kunststoffmaterial Recycling-Material umfaßt.

## Claims

1. Guiding system for amphibians and other animals, in particular on streets, roads or the like with an elongate fence (13, 14, 15, 16) which is assembled from individual fence elements (40, 60) linked together and which is erected on the subsoil on at least one side of the deck (10) of the street, road or the like, with at least one tunnel (11) formed of tubular tunnel elements (12) below the deck (10), whose one entry lies on the side of the fence remote from the deck (10), the fence elements (40, 60) being elongate plate or shell elements having a first exterior (1) which is located on the side near the deck (10), slopes away from the deck (10) and is easily climbed by the animals, the second exterior (2) opposite the first exterior (1) being difficult for animals to climb and being formed vertically to the subsoil and/or with an overhang, characterised in that the upper region (47, 63) of the fence element (40, 60) is supported by one or more supports (49, 64) in the subsoil, and in that the lower region (43, 61) of the fence elements (40, 60) lying on the subsoil is formed by an outward-facing flange-like section on the lower edge of the first exterior (1) for fixing to the subsoil.

2. Guiding system according to claim 1, characterised in that at least one upright slot (52) is formed in the fence elements (40).

3. Guiding system according to one of the preceding claims, characterised in that the supports (49, 64) are in the form of plates or posts.

4. Guiding system according to one of the preceding claims, characterised in that the supports (49) can be inserted into the subsoil.

5. Guiding system according to one of the preceding claims, characterised in that fixing to the subsoil can be effected by means of stakes (44) or the like, which are guided through holes in the fence element (40).

6. Guiding system according to claim 5, characterised in that the flange-like section (43) has holes.

7. Guiding system according to one of the preceding claims, characterised in that the fence elements (40, 60) have in the upper region a section (63, 50) projecting horizontally and/or diagonally or vertically downwards.

8. Guiding system according to one of the preceding claims, characterised in that the fence elements (40) are curved in cross-section for at least part of their height.

9. Guiding system according to one of the preceding claims, characterised in that markings or attenuation lines (66) or the like, which extend at an angle of 90° to the left-hand axis, are provided on the abutting ends of the fence elements (40, 60).

10. Guiding system according to one of the preceding claims, characterised in that the fence elements (40, 60) have a section (56) which widens or tapers at one end in the manner of a step or muff, and which can be engaged telescopically with the other end of an adjacent fence element (40, 60).

11. Guiding system according to one of the preceding claims, characterised by foil sections or flexible plate sections, which are laid over contact points between abutting fence elements (30, 60) and are connected thereto.

12. Guiding system according to one of the preceding claims, characterised by U-shaped pegs or the like for attaching abutting fence elements (40, 60).

13. Guiding system according to one of the preceding claims, characterised in that the upper ends of the supports (49) are received by a recess (48) in the fence elements (40) and are fixed by means of a screw fixing (51).

14. Guiding system for amphibians and other animals, in particular on streets, roads or the like with an elongate fence (13, 14, 15, 16) which is assembled from individual fence elements (40, 60) linked together and which is placed on the subsoil on at least one side of the deck, street, road or the like, with at least one tunnel (11) composed of tubular tunnel elements (12) and formed below the deck (10), whose one entry lies on the side of the fence remote from the deck (10), characterised in that the tunnel elements (12) have a relatively friction-resistant upper wall section (20a), which is provided with entry slots or holes (31), in which case the tunnel elements (12) are so installed in the subsoil of the street, road or the like that the upper sides (29) of the tunnel elements (12) extend almost flush with the surface of the deck (10).

15. Guiding system according to claim 14, characterised in that the tunnel elements (12) are formed in one piece from concrete polymer.

16. Guiding system according to one of the preceding claims, characterised in that guide faces (19, 20), which extend approximately transverse to the longitudinal direction of the fence (13, 14, 15, 16), are located in front of the entry of the tunnel (11).

17. Guiding system according to claim 16, characterised by a guide element (17, 18) which is approximately triangular in cross-section and whose one point lies approximately on the axis of the tunnel (11).

18. Guiding system according to one of the preceding claims, characterised in that the fence elements (40, 60) and/or the supports (49, 64) and/or the stakes (44) are formed of plastics material.

19. Guiding system according to claim 18, characterised in that the plastics material contains recycled material.

**Revendications**

1. Système de guidage pour amphibies et autres animaux, en particulier sur des routes, chemins ou analogues, comprenant une clôture allongée (13, 14, 15, 16) et constituée de différents éléments de clôture (40, 60) juxtaposés, installée sur le sol sur au moins un côté de la chaussée (10) de la route, du chemin ou analogue, au moins un tunnel (11) constitué d'éléments tubulaires de tunnel (12) et installé audessous de la chaussée (10), dont l'une des entrées se situe du côté de la clôture opposé à la chaussée (10), les éléments de clôture (40, 60) étant réalisés sous la forme d'éléments de plaques ou de coques allongés lesquels présentent une première face extérieure (1) dirigée vers la chaussée (10), inclinée dans la direction opposée à la chaussée (10) et pouvant être facilement gravie par les animaux, et dont la seconde face extérieure (2) opposée à la première face extérieure (1) difficile à gravir par les animaux présente une forte pente vers le sol et/ou un surplomb, **caractérisé en ce** que la région supérieure (47, 63) de l'élément de clôture (40, 60) prend appui sur le sol par l'intermédiaire d'un ou de plusieurs supports (49, 64), et que la région inférieure (43, 61) des éléments de clôture (40, 60) reposant sur le sol est constituée par une section en forme de bride dirigée vers l'extérieur au bord inférieur de la première face extérieure (1) pour permettre la fixation dans le sol.

2. Système de guidage selon la revendication 1, caractérisé en ce que dans les éléments de clôture (40) est conformée au moins une fente (52) qui s'étend dans le sens vertical.

3. Système de guidage selon l'une des revendications précédents, caractérisé en ce que les supports (49, 64) sont conformés en plaques ou en pieux.

4. Système de guidage selon l'une des revendications précédentes, caractérisé en ce que les supports (49) peuvent être enfoncés dans le sol.

5. Système de guidage selon l'une des revendications précédentes, caractérisé en ce que la fixation dans le sol peut être effectuée à l'aide de fiches (44) ou analogues lesquelles passent par des trous dans l'élément de clôture (40).

6. Système de guidage selon la revendication 5, caractérisé en ce que la section (43) en forme de bide présente des trous.

7. Système de guidage selon l'une des revendications précédentes, caractérisé en ce que les éléments de clôture (40, 60) présentent dans la partie supérieure une section (63, 50) orientée horizontalement et/ou en oblique ou verticalement vers le bas.

8. Système de guidage selon l'une des revendications précédentes, caractérisé en ce que la section transversale des éléments de clôture (40) présente, au moins sur une partie de leur hauteur, une courbure en arc.

9. Système de guidage selon l'une des revendications précédentes, caractérisé en ce qu'aux extrémités contiguës des éléments de clôture (40, 60) sont prévus des marquages ou des lignes d'affaiblissement (66) ou analogues qui s'étendent par rapport à l'axe longitudinal sous un angle différent de 90°.

10. Système de guidage selon l'une des revendications précédentes, caractérisé en ce que les éléments de clôture (40, 60) présentent à l'une des extrémités une section (56) élargie ou diminuée en échelon ou en manchon laquelle peut coopérer de manière télescopique avec l'autre extrémité d'un élément de clôture (40, 60) voisin.

11. Système de guidage selon l'une des revendications précédentes, caractérisé en ce qu'il comporte des sections de feuilles ou de plaques flexibles qui sont placées par-dessus les joints entre des éléments de clôture (30, 60) contigus et reliées à ceux-ci.

12. Système de guidage selon l'une des revendications précédentes, caractérisé en ce qu'il comprend des agrafes en U ou analogues pour la liaison entre des éléments de clôture (40, 60) contigus.

13. Système de guidage selon l'une des revendications précédentes, caractérisé en ce que les extrémités supérieures des supports (49) sont logées dans un évidement (48) des éléments de clôture (40) et fixées au moyen d'un assemblage à vis (51).

14. Système de guidage pour amphibies et autre animaux, en particulier sur des routes, chemins ou analogues, comprenant une clôture allongée (13, 14, 15, 16) et constituée de différentes éléments de clôture (40, 60) juxtaposés, installée sur le sol sur un côté de la chaussée, de la route ou analogue, au moins un tunnel (11) constitué d'éléments tubulaires de tunnel (12) et installé au-dessous de la chaussée (10), dont l'une des entrées se situe du côté de la clôture opposé à la chaussée, **caractérisé en ce** que les éléments de tunnel (12) présentent une section de paroi supérieure (20a) relativement résistante à l'usure qui est munie de fentes ou de trous de passage (31), les éléments de tunnel (12) étant installés dans le sol de la route, du chemin ou analogue de manière que les faces supérieures (29) des éléments de tunnel (12) s'alignent à peu près avec la surface de la chaussée (10).

15. Système de guidage selon la revendication 14, caractérisé en ce que les éléments de tunnel (12) sont conformés d'un seul tenant en béton au polymère.

16. Système de guidage selon l'une des revendications précédentes, caractérisé en ce que devant l'entrée du tunnel (11) sont disposées des surfaces de guidage (19, 20) qui s'étendent à peu près transversalement à la direction longitudinale de la clôture (13, 14, 15, 16).

17. Système de guidage selon la revendication 16, caractérisé en ce qu'il comprend un élément de guidage (17, 18) présentant une section transversale sensiblement triangulaire dont la pointe se situe à peu près dans l'axe du tunnel (11).

18. Système de guidage selon l'une des revendications précédentes, caractérisé en ce que les éléments de clôture (40, 60) et/ou les supports (49, 64) et/ou les fiches (44) sont conformés en matière plastique.

19. Système de guidage selon la revendication 18, caractérisé en ce que la matière plastique comprend du matériau de recyclage.

FIG.1

FIG.2

FIG.3

FIG.4

FIG.5

FIG.6

FIG.7